# EUROPÄISCHE PATENTSCHRIFT

(11) **EP 0 749 992 B1**
(45) Veröffentlichungstag und Bekanntmachung des Hinweises auf die Patenterteilung: **14.10.1998**
(21) Anmeldenummer: 96109314.3
(22) Anmeldetag: 11.06.1996
(51) Int. Cl.: C08F 297/08, C08F 210/06, C08F 2/34, B01J 19/18

(54) **Vorrichtung zur Gasphasenpolymerisation von C2-C8-Alk-1-enen**
Apparatus for the gas phase polymerization of C2-C8 olefins
Dispositif pour la polymérisation des C2-C8-oléfines en phase gazeuse

(30) Priorität: 20.06.1995 DE 19522283
(43) Veröffentlichungstag der Anmeldung: 27.12.1996
(73) Patentinhaber: BASF AKTIENGESELLSCHAFT, 67056 Ludwigshafen (DE)
(72) Erfinder: Wietfeldt-Haltenhoff, Stefan, Dr., 50354 Hürth (DE); Hamann, Axel, 50169 Kerpen (DE)

(56) Entgegenhaltungen:
- EP-A- 0 192 427
- EP-A- 0 442 316
- EP-A- 0 648 697

## Beschreibung

Die vorliegende Erfindung betrifft eine Vorrichtung zur Gasphasenpolymerisation von C₂-C₈-Alk-1-enen mit Hilfe eines Ziegler-Katalysators, bestehend aus wenigstens zwei hintereinander geschalteten Reaktoren, welche jeweils mit einem pulverförmigen Reaktionsbett gefüllt sind, das mit einem Rührer in Bewegung gehalten wird, wobei das im ersten Reaktor erhaltene Polymerisat mittels mindestens eines in das pulverförmige Reaktionsbett eintauchenden Rohres aus dem ersten Reaktor ausgeführt und zusammen mit nicht umgesetzten Monomeren und noch aktiven Ziegler-Katalysatorbestandteilen in den darauffolgenden Reaktor eingespeist wird und wobei man das oder die vom ersten in den zweiten Reaktor überleitenden Rohre so weit in den zweiten Reaktor hineinragen läßt, daß der Abstand zwischen den Rohrenden und dem pulverförmigen Reaktionsbett weniger als 15 Prozent des Abstandes zwischen dem oberen Reaktorende und dem pulverförmigen Reaktionsbett beträgt.

Außerdem betrifft die vorliegende Erfindung ein Verfahren zur Herstellung von Polymerisaten aus C₂-C₈-Alk-1-enen mit Hilfe der erfindungsgemäßen Vorrichtung.

Polymerisate von C₂-C₈-Alk-1-enen können sowohl durch Flüssigphasenpolymerisation als auch durch Polymerisation einer Aufschlämmung oder durch Gasphasenpolymerisation hergestellt werden. Aufgrund der leichten Abtrennbarkeit des entstehenden festen Polymerisats vom gasförmigen Reaktionsgemisch wird in zunehmendem Maße aus der Gasphase heraus polymerisiert. Die Polymerisation wird dabei mit Hilfe eines Ziegler-Katalysatorsystems durchgeführt, welches üblicherweise aus einer geträgerten titanhaltigen Feststoffkomponente, einer organischen Aluminiumverbindung und einer organischen Silanverbindung besteht (EP-B 45 977, EP-A 171 200, US-A 4 857 613, US-A 5 288 824).

Zu den Polymerisaten von C₂-C₈-Alk-1-enen zählen u.a. die entsprechenden Homopolymerisate, Copolymerisate sowie sogenannte Blockcopolymerisate. Letztere sind meist Gemische aus verschiedenen Homo- bzw. Copolymerisaten von C₂-C₈-Alk-1-enen, die sich vor allem durch eine gute Schlagzähigkeit auszeichnen. Sie werden gewöhnlich in sogenannten Reaktor-Kaskaden aus mindestens zwei hintereinandergeschalteten Reaktoren hergestellt, wobei das aus dem ersten Reaktor erhaltene Polymerisat in Anwesenheit von noch aktiven Ziegler-Katalysatorbestandteilen in den zweiten Reaktor übergeführt wird, wo diesem weitere Monomere hinzupolymerisiert werden. Die Reaktoren enthalten dabei ein pulverförmiges Reaktionsbett aus feinteiligem Polymerisat, welches durch einen Rührer in Bewegung gehalten wird.

Die nicht umgesetzten Monomere werden dabei am Kopf des Reaktors, d.h. am oberen Reaktorende zunächst abgezogen, anschließend in einem Kreisgasfilter von mitgerissenen Polymerisatteilchen abgetrennt, in einem Wärmeaustauscher gekühlt und als flüssige Monomere erneut in den Reaktor eingeführt, wo sie dann rasch verdampfen. Durch diese Kreisgasführung erreicht man u.a. eine rasche Abfuhr der bei der Polymerisation entstehenden Reaktionswärme und eine gute Durchmischung des pulverförmigen Reaktionsbettes mit Monomeren.

Bei der Herstellung einiger Polymerisate von C₂-C₈-Alk-1-enen, insbesondere bei Copolymerisationen in Reaktorkaskaden beobachtet man häufig eine Verkürzung der Standzeiten der Kreisgasfilter im Kühlkreis des nachgeschalteten Reaktors. Weitere Nachteile ergeben sich durch einen sehr schnellen Anstieg des Filter-Differenzdruckes und der damit verbundenen Notwendigkeit, das erste Filter rasch gegen ein zweites Filter auszutauschen, um das mit Katalysator- und Polymerisatpartikel verunreinigte erste Filter gründlich reinigen zu können. Ursache für diese Verunreinigungen und den schnellen Anstieg des Filter-Differenzdruckes sind ein teilweises Übertragen von noch aktiven Katalysatorpartikeln in das Kreisgassystem, was zur Polymerisation von bislang unverbrauchten Monomeren im Kreisgassystem und damit verbunden zu einer Belagbildung führt. Durch das spontane Abplatzen dieser Beläge entsteht ein sprunghafter Anstieg des Druckverlusts über das Kreisgasfilter, was eine verkürzte Betriebsdauer des Kreisgasfilters zur Folge hat. Auf diese Weise wird nicht nur der Reaktorausstoß vermindert, es ergeben sich außerdem erhöhte Reinigungskosten und eine Qualitätsminderung bei den entstehenden Polymerisaten.

Der vorliegenden Erfindung lag daher die Aufgabe zugrunde, den geschilderten Nachteilen abzuhelfen und eine neue Vorrichtung zu entwickeln, welche die Herstellung von Polymerisaten aus C₂-C₈-Alk-1-enen mit erhöhtem Reaktorausstoß möglich macht.

Demgemäß wurde eine neue Vorrichtung zur Gasphasenpolymerisation von C₂-C₈-Alk-1-enen mit Hilfe eines Ziegler-Katalysators entwickelt, bestehend aus wenigstens zwei hintereinander geschalteten Reaktoren, welche jeweils mit einem pulverförmigen Reaktionsbett gefüllt sind, das mit einem Rührer in Bewegung gehalten wird, wobei das im ersten Reaktor erhaltene Polymerisat mittels mindestens eines in das pulverförmige Reaktionsbett eintauchenden Rohres aus dem ersten Reaktor ausgeführt und zusammen mit nicht umgesetzten Monomeren und noch aktiven Ziegler-Katalysatorbestandteilen in den darauffolgenden Reaktor eingespeist wird und wobei man das oder die vom ersten in den zweiten Reaktor überleitenden Rohre so weit in den zweiten Reaktor hineinragen läßt, daß der Abstand zwischen den Rohrenden und dem pulverförmigen Reaktionsbett weniger als 15 Prozent des Abstandes zwischen dem oberen Reaktorende und dem pulverförmigen Reaktionsbett beträgt.

Die erfindungsgemäße Vorrichtung eignet sich zur Gasphasenpolymerisation von C₂-C₈-Alk-1-enen mit Hilfe eines Ziegler-Katalysators. Als C₂-C₈-Alk-1-ene werden dabei insbesondere Ethylen, Propylen, But-1-en, Pent-1-en, Hex-1-en, Hept-1-en oder Oct-1-en verstanden, wobei Ethylen, Propylen oder But-1-en bevorzugt eingesetzt werden. Die erfindungsgemäße Vorrichtung eignet sich u.a. zur Herstellung von Homopolymerisaten des Propylens und von Copolymerisaten des Propylens mit bis zu 25 Gew.-% von einpolymerisiertem Ethylen. Besonders gute Ergebnisse werden mit der erfindungsgemäßen Vorrichtung dann erzielt, wenn sie zur Herstellung von sogenannten Blockcopolymerisaten des Propylens aus einem Propylenhomopolymerisat und einem Propylen-Ethylen-Copolymerisat oder zur Herstellung eines Propylenhomopolymerisats verwendet werden.

Als Ziegler-Katalysatoren werden dabei insbesondere solche Katalysatorsysteme verwendet, die neben einer titanhaltigen Feststoffkomponente noch Cokatalysatoren in Form von organischen Aluminiumverbindungen und Elektronendonorverbindungen aufweisen.

In der erfindungsgemäßen Vorrichtung können aber auch Ziegler-Katalysatoren auf der Basis von Metallocenkatalysatorsystemen eingesetzt werden. Derartige Metallocenkatalysatorsysteme sind u.a. aus der DE-A 41 30 299 bekannt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm3/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi- (C₁-C₁₀-alkyl) -Verbindungen verwendet werden. Daneben kann die titanhaltige Feststoffkomponente noch Halogen, bevorzugt Chlor oder Brom, enthalten.

Außerdem werden bei der Herstellung der titanhaltigen Feststoffkomponente in der Regel noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen verwendet. Bevorzugt werden als Elektronendonorverbindungen innerhalb der titanhaltigen Feststoffkomponente Phthalsäurederivate der allgemeinen Formel (I) 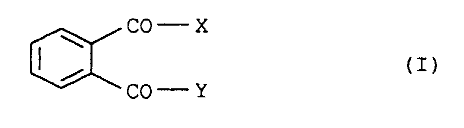 eingesetzt, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das aus der US-A 5 288 824 bekannte Verfahren angewandt.

Die auf diese Weise erhältliche titanhaltige Feststoffkomponente wird mit Cokatalysatoren als Ziegler-Katalysatorensystem verwendet. Als Cokatalysatoren kommen dabei organische Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Verbindungen sind dabei siliciumorganische Verbindungen der allgemeinen Formel (II)

R¹nSi(OR²)₄₋ₙ (II)

wobei R¹ gleich oder verschieden ist und eine C₁- bis C₂₀-Alkylgruppe, eine 5- bis 7gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ eine C₁- bis C₈-Alkylgruppe oder eine 5- bis 7gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisopropyl-sek.-butylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in den Polymerisationsreaktor eingebracht werden.

Derartige Ziegler-Katalysatorsysteme werden vorzugsweise in der erfindungsgemäßen Vorrichtung zur Gasphasenpolymerisation von C₂-C₈-Alk-1-enen verwendet.

Die erfindungsgemäße Vorrichtung besteht aus wenigstens zwei hintereinander geschalteten Reaktoren, welche jeweils mit einem pulverförmigen Reaktionsbett gefüllt sind, das mit einem Rührer in Bewegung gehalten wird. Es können dabei die üblichen, für die Polymerisation von C₂-C₈-Alk-1-enen verwendeten Reaktoren eingesetzt werden, die sowohl absatzweise als auch kontinuierlich betrieben werden können. Bevorzugte Vorrichtungen enthalten zwei hintereinander geschaltete Reaktoren, die als pulverförmiges Reaktionsbett insbesondere ein Polymerisat aus C₂-C₈-Alk-1-enen aufweisen. Als besonders bevorzugtes pulverförmiges Reaktionsbett wird ein feinteiliges Propylenhomopolymerisat oder ein Propylencopolymerisat mit untergeordneten Anteilen anderer C₂-C₈-Alk-1-ene verwendet. Weitere erfindungsgemäße Vorrichtungen können aber auch mehr als zwei hintereinander geschaltete Reaktoren enthalten.

Das pulverförmige Reaktionsbett wird durch einen Rührer in Bewegung gehalten, wobei sich sogenannte frei tragende Wendelrührer dafür besonders gut eignen. Derartige Rührer sind u.a. aus der EP-B 512 und der EP-B 31 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 38 478 beschrieben.

Bevorzugte Vorrichtungen bestehen aus zwei hintereinander geschalteten, kesselförmigen, mit einem Rührer versehenen Reaktoren mit einem Rauminhalt von vorzugsweise 12,5, 25, 50 oder 75 m³.

Eine bevorzugte erfindungsgemäße Vorrichtung ist in der nachfolgenden Figur schematisch dargestellt. Diese besteht aus zwei hintereinandergeschalteten Reaktoren (1) und (2), die jeweils mit einem frei tragenden Wendelrührer (3) und (4) versehen sind.

Beide Reaktoren sind mit mindestens einem Rohr (5) miteinander verbunden, durch welches das im ersten Reaktor (1) gebildete Polymerisat in den zweiten Reaktor (2) übergeführt werden kann. Nicht verbrauchte, gasförmige Monomere werden jeweils aus dem Kopf des Reaktors, d.h. am oberen Reaktorende zunächst über ein weiteres Rohr (6) bzw. (7) abgezogen und anschließend jeweils über ein Kreisgasfilter (8) bzw. (9) von mitgerissenen Polymerisatteilchen abgetrennt. Danach werden die Monomere aus dem ersten Reaktor (1) mit Hilfe eines Kondensators (10) verflüssigt und über eine Pumpe (12) wieder in den Reaktor (1) als Flüssigkeiten bzw. als Zweiphasengemisch zusammen mit frischen Monomeren eingebracht, wo sie unter den gegebenen Bedingungen rasch verdampfen. Die Monomere aus dem zweiten Reaktor (2) werden mit Hilfe eines zwischen dem Kreisgasfilter (9) und dem Kondensator (11) eingebauten Kompressors (14) verdichtet und danach entweder durch Kondensatoren (11) und (13) verflüssigt und auf tiefere Temperaturen abgekühlt oder bei höherer Verdichtung wieder auf Reaktionsdruck entspannt, wobei durch den Joule-Thompson-Effekt eine entsprechende Verflüssigung und Abkühlung erfolgt. Durch diese Kreisgasführung verbunden mit der Verdampfungskühlung durch die flüssig eingebrachten Monomere gelingt es, die bei der Polymerisation entstehende Reaktionswärme rasch abzuführen und für eine gute Durchmischung des pulverförmigen Reaktionsbettes mit Monomeren zu sorgen.

Neben den Monomeren und den Cokatalysatoren können in die Reaktoren auch noch Molmassenregler, beispielsweise Wasserstoff, eingeführt werden.

In der erfindungsgemäßen Vorrichtung wird das im ersten Reaktor erhaltene Polymerisat mittels mindestens eines in das pulverförmige Reaktionsbett eintauchenden Rohres aus dem ersten Reaktor ausgeführt und zusammen mit nicht umgesetzten Monomeren und noch aktiven Ziegler-Katalysatorbestandteilen in den darauffolgenden Reaktor eingespeist. Dabei können die in der Polymerisationstechnik üblichen Rohre verwendet werden. Diese weisen vorzugsweise Durchmesser von 110 bis 170 cm, insbesondere von 130 bis 170 cm, auf und bestehen üblicherweise aus Edelstahl.

Die erfindungsgemäße Vorrichtung zeichnet sich insbesondere dadurch aus, daß das oder die vom ersten in den zweiten Reaktor überleitenden Rohre so weit in den zweiten Reaktor hineinragen, daß der Abstand zwischen den Rohrenden und dem pulverförmigen Reaktionsbett weniger als 15 Prozent des Abstandes zwischen dem oberen Reaktorende, d.h. dem Kopf des Reaktors und dem pulverförmigen Reaktionsbett beträgt. Vorzugsweise wird dieser Abstand auf weniger als 10 Prozent und insbesondere auf weniger als 5 Prozent des Abstandes zwischen dem oberen Reaktorende und dem pulverförmigen Reaktionsbett eingestellt.

Nach einer ebenfalls bevorzugten Ausgestaltung der erfindungsgemäßen Vorrichtung werden das oder die in den zweiten Reaktor hineinragenden Rohre ab dem oberen Reaktorende im Durchmesser um mindestens 20 Prozent, bezogen auf den durchschnittlichen Durchmesser der Rohre zwischen dem ersten und dem zweiten Reaktor, erweitert. Besonders bevorzugte Vorrichtungen zeichnen sich u.a. dadurch aus, daß das oder die in den zweiten Reaktor hineinragenden Rohre ab dem oberen Reaktorende im Durchmesser um mindestens 50 Prozent und insbesondere um 80 Prozent, bezogen auf den durchschnittlichen Durchmesser der Rohre zwischen dem ersten und dem zweiten Reaktor erweitert werden. Besonders bevorzugte Vorrichtungen zeichnen sich u.a. noch dadurch aus, daß das oder die in den zweiten Reaktor hineinragenden Rohre ab dem oberen Reaktorende um bis zu 6 Grad, insbesondere um bis zu 9 Grad, aus der Senkrechten zur Reaktormitte hin gebogen sind.

Durch die erfindungsgemäße Ausgestaltung der Vorrichtung zur Gasphasenpolymerisation von C₂-C₈-Alk-1-enen ist es möglich, die Aufprallgeschwindigkeit des aus dem Rohr austretenden Strahls bestehend aus Monomeren, pulverförmigem Polymerisat und Katalysatorbestandteilen auf das pulverförmige Reaktionsbett deutlich zu reduzieren. Weiterhin ist es von Vorteil, daß das oberhalb des pulverförmigen Reaktionsbettes verbleibende Reaktorvolumen nunmehr zur Gasberuhigung genutzt werden kann. Dies hat u.a. zur Folge, daß die Staubwolkenbildung und der daraus resultierende Produktübertrag in das Kreisgassystem unterbunden wird. In jedem Fall ist aber ein Eintauchen der Rohre in das pulverförmige Reaktionsbett zu vermeiden.

Mit Hilfe der erfindungsgemäßen Vorrichtung können C₂-C₈-Alk-1-ene in Anwesenheit eines Ziegler-Katalysators aus der Gasphase heraus polymerisiert werden. Das ebenfalls erfindungsgemäße Verfahren zeichnet sich insbesondere durch einen hohen Produktausstoß aus und liefert insbesondere dann gute Ergebnisse, wenn man im ersten Reaktor ein Propylenhomopolymerisat oder Propylencopolymerisat mit untergeordneten Anteilen anderer C₂-C₈-Alk-1-ene herstellt und im zweiten Reaktor dem im ersten Reaktor erhaltenen Polymerisat ein Gemisch aus Propylen und einem oder mehreren C₂-C₈-Alk-1-enen hinzupolymerisiert. Vorzugsweise wird dabei im ersten Reaktor bei einem Druck von 15 bis 40 bar und bei einer Temperatur von 50 bis 120°C Propylen polymerisiert und im zweiten Reaktor bei einem Druck von 10 bis 30 bar und bei einer Temperatur von 30 bis 90°C ein Gemisch aus Propylen und einem oder mehreren C₂-C₈-Alk-1-enen copolymerisiert. Bevorzugt sind im ersten Reaktor Drücke von 17 bis 35 bar und Temperaturen von 65 bis 110°C, im zweiten Reaktor Drücke von 10 bis 25 bar und Temperaturen von 40 bis 80°C. Als Molmassenregler kann dabei in beiden Reaktoren Wasserstoff verwendet werden. Der Druck im ersten Reaktor sollte dabei mindestens 10 bar, insbesondere mindestens 7 bar höher sein als der Druck im zweiten Reaktor.

Die mittleren Verweilzeiten des erfindungsgemäßen Verfahrens liegen im ersten Reaktor bei 0,5 bis 5 Stunden, im zweiten Reaktor betragen sie 0,25 bis 4 Stunden. Bevorzugte erfindungsgemäße Verfahren weisen im ersten Reaktor mittlere Verweilzeiten von 0,6 bis 4 Stunden und insbesondere von 0,7 bis 3 Stunden und im zweiten Reaktor von 0,3 bis 3,5 Stunden und insbesondere von 0,35 bis 2,5 Stunden auf.

Mit Hilfe der erfindungsgemäßen Vorrichtung sowie des ebenfalls erfindungsgemäßen Verfahrens ist es u.a. möglich, den Produktausstoß, d.h. die pro Stunde hergestellte Menge an Polymerisaten von C₂-C₈-Alk-1-enen, ohne großen regeltechnischen Aufwand deutlich zu verbessern. Weiterhin kann die Zahl der Reinigungsschritte vermindert werden. Die dabei erhaltenen Polymerisate zeichnen sich u.a. durch eine hohe Reinheit aus.

Die erfindungsgemäße Vorrichtung kann zur Herstellung der verschiedenen Arten von Polymerisaten von C₂-C₈-Alk-1-enen verwendet werden, beispielsweise zur Herstellung von Homopolymerisaten, Copolymerisaten oder von Gemischen aus derartigen Polymerisaten.

### Beispiel

Eine Reaktor-Kaskade aus zwei hintereinander geschalteten Reaktoren mit einem Rauminhalt von 25 m³, die jeweils einen frei tragenden Wendelrührer aufweisen, wurde zur Herstellung sogenannter Propylen-Blockcopolymerisate verwendet. Jeder der Reaktoren wurde mit etwa 6 bis 8 Tonnen eines pulverförmigen Propylenhomopolymerisats mit einem Schmelzflußindex, bei 2,16 kg und 230°C, von 20 g/10 min [nach DIN 53 735] gefüllt und mit Hilfe des Wendelrührers bei einer Drehzahl von 28 bis 45 Umdrehungen pro Minute in Bewegung gehalten.

Im ersten Reaktor wurde bei einem Druck von 30 bar, einer Temperatur von 81°C und bei einer mittleren Verweilzeit des Reaktionsgemisches von 50 min ein Propylenhomopolymerisat hergestellt. Dabei wurde in das pulverförmige Reaktionsbett Propylen zusammen mit einem Ziegler-Katalysatorsystem eindosiert. Als Ziegler-Katalysatorsystem wurde eine titanhaltige Feststoffkomponente zusammen mit Triethylaluminium und Isobutylisopropyldimethoxysilan entsprechend der Lehre der US-A 5 288 824 eingesetzt. Zur Molmassenregelung wurde pro Tonne Propylen zwischen 130 und 150 g hochreiner Wasserstoff hinzudosiert.

Die bei der Polymerisation entstehende Reaktionswärme wurde durch Verdampfungskühlung abgeführt. Zu diesem Zweck wurde ein Kreisgasstrom, der quantitativ das 6- bis 7fache der umgesetzten Gasmenge ausmacht, im Kreislauf geführt. Das verdampfte Propylen wurde nach Passieren der Reaktionszone am Kopf des Reaktors abgezogen, in einem Kreisgasfilter von mitgerissenen Polymerteilchen getrennt und gegen Zweitwasser in einem Wärmetauscher kondensiert. Das kondensierte Kreisgas wurde bis 40°C wieder in den Reaktor zurückgepumpt. Der im Kondensator nicht kondensierbare Wasserstoff wurde durch einen Ejektor abgesaugt und dem flüssigen Kreisgasstrom wieder zugeführt.

Die Temperatur im Reaktor wurde über den Kreisgasdurchfluß, der Druck im Reaktor über die Zufuhr von frischen Propylen geregelt.

Das gebildete feinkörnige, trockene Polymerisat wurde nach einer durchschnittlichen Verweilzeit von 50 bis 70 min mit nicht umgesetztem Monomer quasikontinuierlich durch sich periodisch kurzzeitig öffnende Austragshähne aus dem Reaktor ausgetragen. Der Monomeranteil betrug 10 bis 25 Gew.-%. Die Austragsfrequenz wurde über eine radiometrische Füllstandsmessung geregelt.

Das erhaltene pulverförmige Propylenhomopolymerisat wies einen Schmelzflußindex, bei 2,16 kg und 230°C, von 20 g/10 min [nach DIN 53 735] auf. Mit Hilfe zweier in das pulvrige Reaktionsbett des ersten Reaktors eintauchender Rohre wurde das im ersten Reaktor erhaltene Propylenhomopolymerisat anschließend in den zweiten Reaktor übergeführt. Zwischen dem ersten und dem zweiten Reaktor herrschte dabei eine Druckdifferenz von 10 bis 15 bar.

Im zweiten Reaktor wurde zu dem aus dem ersten Reaktor erhaltenen Propylenhomopolymerisat in Anwesenheit noch aktiver Ziegler-Katalysatorbestandteile bei Drücken von 15 bis 17 bar, einer Temperatur von 70°C und mittleren Verweilzeiten von 40 bis 60 min ein Gemisch aus 20 bis 40 Vol.-% Ethylen und 60 bis 80 Vol.-% Propylen copolymerisiert. Zusätzlich wurden 2,0 kg Isopropanol pro Stunde als Regler verwendet. Zur Molmassenregelung wurden pro Stunde zwischen 430 und 460 g hochreiner Wasserstoff hinzudosiert.

Der Reaktionsdruck wurde über eine Splittregelung konstant gehalten: Sank der Druck, wurde frisches Propylen und frisches Ethylen zugegeben, stieg der Druck, wurde Reaktionsgas ins Bleedgas zur Wiederaufarbeitung entspannt. Die Reaktionstemperatur wurde über einen kreisgeführten Gasstrom geregelt. Hierfür wurde gasförmiges Propylen/Ethylen/Wasserstoff-Gemisch am Kopf des Reaktors abgezogen, in einem Kreisgasfilter von mitgerissenen Polymerpartikeln getrennt und über einen Verdichter um 2 bis 4 bar komprimiert. Das Kreisgas wurde danach über Wasserkühler bzw. Ammoniak-Verdampfer abgekühlt und teilweise kondensiert. In dieser Kühlkaskade wurde der Kreisgasstrom auf Temperaturen bis -20°C abgekühlt und zur Temperaturregelung in den Reaktor zurückgeführt.

Das Reaktionsbett in dem Copolymerisationsreaktor wurde ebenfalls durch einen Wendelrührer mit 28 bis 45 Umdrehungen pro Minute umgewälzt.

Das gebildete feinkörnige Propylen-Blockcopolymerisat, bestehend aus dem im ersten Reaktor gebildeten Propylenhomopolymerisat und den im zweiten Reaktor erhaltenen Propylen-Ethylen-Copolymerisat wurde zusammen mit nicht umgesetzten Monomeren quasikontinuierlich durch sich periodisch kurzzeitig öffnende Austragshähne aus dem Reaktor ausgetragen. Der Monomeranteil betrug 10 bis 20 Gew.-%. Die Austragsfrequenz wurde über eine radiometrische Füllstandsmessung geregelt.

Das so erzeugte Blockcopolymerisat wurde nach einer durchschnittlichen Verweilzeit von 40 bis 60 min wiederum über zwei in das Pulverbett eingetauchte Rohre in einen Entspannbehälter ausgetragen, in dem bei einem Druck von 0,1 bis 1,0 bar das Monomere vom Polymerisat abgetrennt wurde, bevor in einem zweiten Entgasungsschritt mittels Stickstoff der Restmonomergehalt minimiert wurde. Schließlich wurde das pulverförmige Endprodukt zur Extrusion überführt, wo sich nach Stabilisierung und Ausrüstung mit diversen Additiven die Homogenisierung, Molmassenmodifizierung und Granulierung ausschloß.

Das auf diese Weise erhaltene Propylen-Blockcopolymerisat enthielt 85 Gew.-% eines Propylenhomopolymerisats und 15 Gew.-% eines Propylen-Ethylen-Copolymerisats mit einem Ethylenanteil, bezogen auf das Copolymerisat, von 50 Gew.-%. Sein Schmelzflußindex lag bei 15 g/10 min, bei 230°C und 2,16 kg, nach DIN 53 735.

Mit Hilfe der erfindungsgemäßen Vorrichtung konnte gegenüber den aus dem Stand der Technik bekannten Vorrichtungen bei Filterstandzeiten von mehr als zwei Wochen eine Verbesserung der Produktionsausstöße von 7,7 bis 10 % erzielt werden.

Dies wurde dadurch erreicht, daß die vom ersten in den zweiten Reaktor überleitenden zwei Rohre so weit in den zweiten Reaktor hineinragten, daß der Abstand zwischen den Rohrenden und dem pulverförmigen Reaktionsbett weniger als 5 Prozent des Abstandes zwischen dem oberen Reaktorende und dem pulverförmigen Reaktionsbett betrug.

Außerdem wurde diese Verbesserung der Produktionsausstöße dadurch erzielt, daß die in den zweiten Reaktor hineinragenden zwei Rohre ab dem oberen Reaktorende im Durchmesser um mindestens 25 Prozent, bezogen auf den durchschnittlichen Durchmesser der Rohre zwischen dem ersten und dem zweiten Reaktor, erweitert wurden.

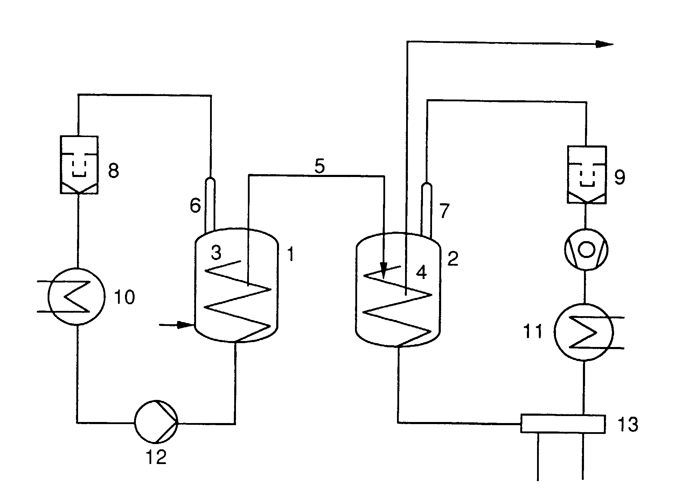

## Patentansprüche

1. Vorrichtung zur Gasphasenpolymerisation von C₂-C₈-Alk-1-enen mit Hilfe eines Ziegler-Katalysators auf der Basis eines Katalysatorsystems enthaltend eine titanhaltige Feststoffkomponente oder auf der Basis eines Metallocenkatalysatorsystems, bestehend aus wenigstens zwei hintereinander geschalteten Reaktoren, welche jeweils mit einem pulverförmigen Reaktionsbett gefüllt sind, das mit einem Rührer in Bewegung gehalten wird, wobei das im ersten Reaktor erhaltene Polymerisat mittels mindestens eines in das pulverförmige Reaktionsbett eintauchenden Rohres aus dem ersten Reaktor ausgeführt und zusammen mit nicht umgesetzten Monomeren und noch aktiven Ziegler-Katalysatorbestandteilen in den darauffolgenden Reaktor eingespeist wird und wobei man das oder die vom ersten in den zweiten Reaktor überleitenden Rohre so weit in den zweiten Reaktor hineinragen läßt, daß der Abstand zwischen den Rohrenden und dem pulverförmigen Reaktionsbett weniger als 15 Prozent des Abstandes zwischen dem oberen Reaktorende und dem pulverförmigen Reaktionsbett beträgt.

2. Vorrichtung nach Anspruch 1, wobei der Abstand zwischen den Rohrenden und dem pulverförmigen Reaktionsbett weniger als 5 Prozent des Abstandes zwischen dem oberen Reaktorende und dem pulverförmigen Reaktionsbett beträgt.

3. Vorrichtung nach einem der Ansprüche 1 oder 2, wobei das oder die in den zweiten Reaktor hineinragenden Rohre ab dem oberen Reaktorende im Durchmesser um mindestens 20 Prozent, bezogen auf den durchschnittlichen Durchmesser der Rohre zwischen dem ersten und dem zweiten Reaktor, erweitert wird.

4. Vorrichtung nach Anspruch 3, wobei der Durchmesser der in den zweiten Reaktor hineinragenden Rohre ab dem oberen Reaktorende um mindestens 50 Prozent, bezogen auf den durchschnittlichen Durchmesser der Rohre zwischen dem ersten und dem zweiten Reaktor, erweitert wird.

5. Vorrichtung nach den Ansprüchen 1 bis 4, wobei als pulverförmiges Reaktionsbett ein feinteiliges Propylenhomopolymerisat oder ein Propylencopolymerisat mit untergeordneten Anteilen anderer C₂-C₈-Alk-1-ene verwendet wird.

6. Vorrichtung nach den Ansprüchen 1 bis 5, wobei das pulverförmige Reaktionsbett mit einem frei tragenden Wendelrührer in Bewegung gehalten wird.

7. Verfahren zur Gasphasenpolymerisation von C₂-C₈-Alk-1-enen mit Hilfe eines Ziegler-Katalysators in wenigstens zwei hintereinander geschalteten Reaktoren, welche jeweils mit einem pulverförmigen Reaktionsbett gefüllt sind, das mit einem Rührer in Bewegung gehalten wird, wobei das im ersten Reaktor erhaltene Polymerisat mittels mindestens eines in das pulverförmige Reaktionsbett eintauchenden Rohres aus dem ersten Reaktor ausgeführt und zusammen mit nicht umgesetzten Monomeren und noch aktiven Ziegler-Katalysatorbestandteilen in den darauffolgenden Reaktor eingespeist wird, dadurch gekennzeichnet, daß man das oder die vom ersten in den zweiten Reaktor überleitenden Rohre so weit in den zweiten Reaktor hineinragen läßt, daß der Abstand zwischen den Rohrenden und dem pulverförmigen Reaktionsbett weniger als 15 Prozent des Abstandes zwischen dem oberen Reaktorende und dem pulverförmigen Reaktionsbett beträgt.

8. Verfahren nach Anspruch 7, dadurch gekennzeichnet, daß man im ersten Reaktor ein Propylenhomopolymerisat oder ein Propylencopolymerisat mit untergeordneten Anteilen anderer C₂-C₈-Alk-1-ene herstellt und im zweiten Reaktor dem im ersten Reaktor erhaltenen Polymerisat ein Gemisch aus Propylen und einem oder mehreren C₂-C₈-Alk-1-enen hinzupolymerisiert.

9. Verfahren nach Anspruch 8, dadurch gekennzeichnet, daß man im ersten Reaktor bei einem Druck von 15 bis 40 bar und einer Temperatur von 50 bis 120°C polymerisiert und im zweiten Reaktor bei einem Druck von 10 bis 30 bar und bei einer Temperatur von 30 bis 90°C die Polymerisation durchführt.

## Claims

1. Apparatus for the gas-phase polymerization of C₂-C₈-alk-1-enes with the aid of a Ziegler catalyst based on a catalyst system containing a titanium-containing solid component or based on a metallocene catalyst system, consisting of at least two reactors which are connected in series and each of which is filled with a pulverulent reaction bed which is kept in motion by means of a stirrer, the polymer obtained in the first reactor being discharged from the first reactor by means of at least one pipe immersed in the pulverulent reaction bed and being fed, together with unconverted monomers and still active Ziegler catalyst components, into the downstream reactor, and the pipe or pipes passing from the first to the second reactor being allowed to project into the second reactor to such an extent that the distance between the pipe ends and the pulverulent reaction bed is less than 15 percent of the distance between the upper reactor end and the pulverulent reaction bed.

2. Apparatus as claimed in claim 1, the distance between the pipe ends and the pulverulent reaction bed being less than 5 percent of the distance between the upper reactor end and the pulverulent reaction bed.

3. Apparatus as claimed in claim 1 or 2, the pipe or pipes projecting into the second reactor being widened from the upper reactor end so that the diameter is at least 20 percent larger, based on the average diameter of the pipes between the first and the second reactor.

4. Apparatus as claimed in claim 3, the diameter of the pipes projecting into the second reactor being widened from the upper reactor end by at least 50 percent, based on the average diameter of the pipes between the first and the second reactor.

5. Apparatus as claimed in any of claims 1 to 4, a fine-particle propylene homopolymer or a propylene copolymer containing minor amounts of other C₂-C₈-alk-1-enes being used as the pulverulent reaction bed.

6. Apparatus as claimed in any of claims 1 to 5, the pulverulent reaction bed being kept in motion by means of an unsupported helical ribbon impeller.

7. A process for the gas-phase polymerization of C₂-C₈-alk-1-enes with the aid of a Ziegler catalyst in at least two reactors which are connected in series and each of which is filled with a pulverulent reaction bed which is kept in motion by means of a stirrer, the polymer obtained in the first reactor being discharged from the first reactor by means of at least one pipe immersed in the pulverulent reaction bed and being fed, together with unconverted monomers and still active Ziegler catalyst components, into the downstream reactor, wherein the pipe or pipes passing from the first to the second reactor are allowed to project into the second reactor to such an extent that the distance between the pipe ends and the pulverulent reaction bed is less than 15 percent of the distance between the upper reactor end and the pulverulent reaction bed.

8. A process as claimed in claim 7, wherein a propylene homopolymer or a propylene copolymer with minor amounts of other C₂-C₈-alk-1-enes is prepared in the first reactor and a mixture of propylene and one or more C₂-C₈-alk-1-enes is polymerized in the second reactor with the polymer obtained in the first reactor.

9. A process as claimed in claim 8, wherein polymerization is effected in the first reactor at from 15 to 40 bar and at from 50 to 120°C and the polymerization is carried out in the second reactor at from 10 to 30 bar and at from 30 to 90°C.

## Revendications

1. Installation de polymérisation en phase gazeuse d'alc-1-ènes en C₂ à C₈ à l'aide d'un catalyseur de Ziegler à base d'un système catalytique comprenant un composant solide contenant du titane, ou à base d'un système catalytique à métallocène, constituée d'au moins deux réacteurs raccordés l'un à la suite de l'autre, qui sont chacun remplis d'un lit de réaction pulvérulent, que l'on maintient en mouvement à l'aide d'un agitateur, où le polymère obtenu dans le premier réacteur est évacué de ce premier réacteur à l'aide d'au moins un tube plongeant dans le lit de réaction pulvérulent et est injecté, ensemble avec des monomères non convertis et des constituants du catalyseur de Ziegler encore actifs, dans le réacteur suivant et où le ou les tubes de transfert du premier réacteur au second réacteur pénètrent dans le second réacteur aussi loin que la distance entre les extrémités du ou des tubes et le lit de réaction pulvérulent est inférieure à 15% de la distance entre l'extrémité supérieure du réacteur et le lit de réaction pulvérulent.

2. Installation suivant la revendication 1, où la distance entre les extrémités des tubes et le lit de réaction pulvérulent est inférieure à 5% de la distance entre l'extrémité supérieure du réacteur et le lit de réaction pulvérulent.

3. Installation suivant l'une quelconque des revendications 1 et 2, où le ou les tubes pénétrant dans le second réacteur sont élargis en diamètre à partir de l'extrémité supérieure du réacteur d'au moins 20% par rapport au diamètre moyen des tubes entre le premier réacteur et le second réacteur.

4. Installation suivant la revendication 3, où le diamètre des tubes pénétrant dans le second réacteur est élargi à partir de l'extrémité supérieure du réacteur d'au moins 50%, par rapport au diamètre moyen des tubes entre le premier réacteur et le second réacteur.

5. Installation suivant l'une quelconque des revendications 1 à 4, où on utilise, à titre de lit de réaction pulvérulent, un homopolymère de propylène ou un copolymère de propylène, finement divisé, avec des proportions mineures d'autres alc-1-ènes en C₂ à C₈.

6. Installation suivant l'une quelconque des revendications 1 à 5, où le lit de réaction pulvérulent est maintenu en mouvement à l'aide d'un agitateur hélicoïdal en porte à faux.

7. Procédé de polymérisation en phase gazeuse d'alc-1-ènes en C₂ à C₈ à l'aide d'un catalyseur de Ziegler dans au moins deux réacteurs raccordés l'un à la suite de l'autre, qui sont chacun remplis d'un lit de réaction pulvérulent, que l'on maintient en mouvement à l'aide d'un agitateur, où le polymère obtenu dans le premier réacteur est évacué de ce premier réacteur à l'aide d'au moins un tube plongeant dans le lit de réaction pulvérulent et est injecté dans le réacteur qui lui fait suite ensemble avec des monomères non convertis et des constituants du catalyseur de Ziegler encore actifs, caractérisé en ce que l'on fait pénétrer le ou les tubes de transfert du premier réacteur dans le second réacteur aussi loin dans le second réacteur que la distance entre les extrémités du ou des tubes et le lit de réaction pulvérulent est inférieure à 15% de la distance entre l'extrémité supérieure du réacteur et le lit de réaction pulvérulent.

8. Procédé suivant la revendication 17, caractérisé en ce que l'on prépare dans le premier réacteur un homopolymère du propylène ou un copolymère du propylène avec des proportions mineures d'autres alc-1-ènes en C₂ à C₈ et, dans le second réacteur, on polymérise par addition au polymère obtenu dans le premier réacteur d'un mélange de propylène et d'un ou plusieurs alc-1-ènes en C₂ à C₈.

9. Procédé suivant la revendication 8, caractérisé en ce que l'on polymérise dans le premier réacteur sous une pression de 15 à 40 bars et à une température de 50 à 120°C et on entreprend la polymérisation dans le second réacteur sous une pression de 10 à 30 bars et à une température de 30 à 90°C.
